# EUROPÄISCHE PATENTSCHRIFT

(11) **EP 3 956 581 B1**
(45) Veröffentlichungstag und Bekanntmachung des Hinweises auf die Patenterteilung: **19.02.2025**
(21) Anmeldenummer: 20719632.0
(22) Anmeldetag: 16.04.2020
(51) Int. Cl.: F16D 25/0638, F16D 25/12

(54) **KÜHLÖLLEITELEMENT SOWIE ANTRIEBSSTRANG MIT DIESEM**
COOLING OIL CONDUCTING ELEMENT AND DRIVETRAIN COMPRISING SAME
ÉLÉMENT DE GUIDAGE D'HUILE DE REFROIDISSEMENT ET CHAÎNE CINÉMATIQUE DOTÉE D'UN TEL ÉLÉMENT DE GUIDAGE D'HUILE DE REFROIDISSEMENT

(30) Priorität: 17.04.2019 DE 102019205570
(43) Veröffentlichungstag der Anmeldung: 23.02.2022
(73) Patentinhaber: ZF Friedrichshafen AG, 88046 Friedrichshafen (DE)
(72) Erfinder: MATSCHAS, Steffen, 97708 Bad Bocklet (DE); ROHM, Axel, 97453 Schonungen (DE); KRAFFT, Ingo, 97440 Werneck (DE); RÖßNER, Monika, 97499 Donnersdorf (DE); EBERT, Angelika, 97453 Schonungen (DE); LARBIG, Julian, 37296 Ringgau - Röhrda (DE)
(86) Internationale Anmeldenummer: PCT/EP2020/060738
(87) Internationale Veröffentlichungsnummer: WO 2020/212511

(56) Entgegenhaltungen:
- DE-A1- 102011 005 504
- DE-A1- 102011 006 027

## Beschreibung

Die vorliegende Erfindung betrifft ein Leitelement für Kühlöl an einem rotierenden Bauteil.

Im Stand der Technik sind verschiedene Möglichkeiten der Verteilung von Kühlöl bekannt. Beispielsweise durch eine gezielte Führung über im Gehäuse oder Bauteilen angeordnete geschlossene Kanäle oder die Verteilung durch rotierende Bauteile, bei denen die Bauteile durch einen vorgesehenen Ölsumpf laufen und/oder durch Fliehkraft zentral zugeführtes Kühlöl verteilen.

Probleme des Standes der Technik liegen in der unkontrollierten Verwirbelung sowie nicht gesteuerten Verteilung des Kühlöls.

DE 10 2011 005 504 A1 offenbart ein Lamellenschaltelement, bei dem auf der axial betrachtet dem Druckraum abgewandten Seite des Kolbens zur Betätigung des Lamellenschaltelementes ein Ölleitblech angeordnet ist.

Aufgabe der vorliegenden Erfindung ist die Bereitstellung ein Kühlölleitelement, welches das Kühlöl gezielt verteilen kann.

Gelöst wird die Aufgabe durch eine Kühlölleiteinrichtung sowie einem Antriebsstrang gemäß den unabhängigen Ansprüchen.

Erfindungsgemäß ist eine Kühlölleiteinrichtung für rotierende Bauteile, wobei ein ringförmiger Ölkanal in radialer Richtung verläuft, und wobei Kühlöl von radial innen zuführbar ist und der Ölkanal radial außen teilweise offen ist, dadurch gekennzeichnet, dass in einem radial äußeren Bereich des Ölkanals ein Dichtbereich vorgesehen ist, dass der Dichtbereich Sperrelemente und Austrittselemente aufweist, dass die Sperrelemente radial innerhalb der Austrittselemente angeordnet sind und zumindest zwei über den Umfang verteilte Durchlässe in radialer Richtung aufweisen, dass durch die Austrittselemente mit den Durchlässen fluchtenden Austrittskanäle und in Umfangsrichtung zwischen den Austrittskanälen gelegene Einlässe gebildet sind, und dass ein Ringkanal zwischen den Sperrelementen und den Austrittselementen vorgesehen ist, um die Einlässe mit den Austrittskanälen beziehungsweise Durchlässen zu verbinden.

An rotierenden Bauteilen, insbesondere im Bereich eines Antriebsstrangs eines Fahrzeugs, wird häufig eine Ölführung über eine Welle beziehungsweise Nabe vorgesehen. Um Öl beispielsweise zur Kühlung an umgebende Bauteile weiterzuführen wird ein Ölkanal benötigt. Hierbei ist in vielen Fällen allerdings eine gezielte Weitergabe des Kühlöls vorteilhaft, da ansonsten gegebenenfalls Öl an Bauteile gelangt, welche nicht oder nur mit geringen Mengen Öl versorgt werden sollen. Durch einen ringförmig um das rotierende Bauteil angeordneten Ölkanal kann bereits der Austritt des Kühlöls weiter nach radial außen verlagert werden.

Um ein definiertes Austreten des Kühlöls zu erreichen, ist ein Dichtbereich im radial äußeren Bereich des Ölkanals vorgesehen. Der Dichtbereich umfasst mehrere Sperrelemente, welche umlaufend, vorzugsweise auf einem Durchmesser, vorgesehen sind und zwischen den Sperrelementen Durchlässe mit einem definierten Querschnitt gebildet sind. Durch die Durchlässe, insbesondere deren Anzahl und Querschnitt, kann die Menge des Kühlöls definiert werden.

Die Sperrelemente sind radial außen von Austrittselementen umgeben. Durch die Austrittselemente werden in radialer Richtung mit den Durchlässen fluchtende Austrittskanäle definiert. Über die Austrittskanäle kann das Kühlöl gezielt nach radial au-ßen an umgebenden Bauteile abgegeben werden. Zusätzlich werden durch die Austrittselemente Einlässe definiert, welche in Umfangsrichtung zwischen den Austrittskanälen angeordnet sind. Es sind mindestens halb so viele Einlässe wie Austrittskanäle vorgesehen, wobei auch bis zu einem Vielfachen, insbesondere doppelten, an Einlässe vorgesehen sein kann. Vorzugsweise sind gleich viele Austrittskanäle und Einlässe vorgesehen.

Zwischen den Sperrelementen und den Austrittselementen ist ein Ringkanal vorgesehen, welche die Einlässe mit den Austrittskanälen, und damit auch den Durchlässen, verbindet. Durch den Ringkanal wird jeweils zumindest ein Einlass mit zumindest einem Austrittskanal verbunden. Dies beinhaltet auch, dass ein Einlass mit mehreren Austrittskanälen und/oder ein Austrittskanal mit mehreren Einlässen verbunden ist. Ein vorteilhaftes Ausführungsbeispiel sieht einen um den gesamten Umfang umlaufenden Ringkanal vor.

Aufgrund des austretenden Kühlöls aus den Austrittskanälen entsteht radial innen ein Unterdruck. Um eine Verwirbelung des Kühlöls durch den Unterdruck zu vermeiden, sind die Einlässe vorgesehen, über welche eine das rotierende Bauteil umgebenden Atmosphäre, wie Luft, einströmen kann, um den Unterdruck auszugleichen. Die Einströmende Luft tritt zusammen mit dem Kühlöl aus dem Austrittskanal aus. Es bildet sich somit eine Art Kreiselpumpeneffekt aus.

Ausführungsformen einer Kühlölleiteinrichtung sind dadurch gekennzeichnet, dass sich der Querschnitt der Durchlässe in radialer Richtung nach außen verringert. Aufgrund der auf den Ölstrom wirkenden physikalischen Kräfte würde der Ölstrom nach den Durchlässen zerstäubt beziehungsweise verwirbelt werden (Expansion aufgrund höherer, vom Durchmesser abhängigen, Geschwindigkeit). Um dies zu vermeiden, sind die Durchlässe in radiale Richtung verjüngt ausgebildet. Hierdurch wird eine Expansion des Ölstroms verhindert. Somit tritt der Ölstrom mit weitestgehend laminarer Strömung in den Austrittskanal ein.

Kühlölleiteinrichtung gemäß Ausführungsformen sind dadurch gekennzeichnet, dass sich der Querschnitt der Austrittskanäle in radialer Richtung nach außen verringert. Neben der über die Einlässe einströmenden Luft zum Ausgleich des entstehenden Unterdrucks, können zusätzlich die Austrittskanäle mit einem sich nach außen verjüngten Querschnitt vorgesehen sein. Durch den vorzugsweise kontinuierlich verringerten Querschnitt kann, wie bei den zuvor beschriebenen Durchlässen, einer Expansion des Ölstroms entgegengewirkt werden. Dies führt zu einem möglichst laminar aus dem Austrittskanal austretenden Ölstrom. Somit wird eine Verwirbelung beziehungsweise Zerstäubung des Ölstroms verringert oder vermieden, wodurch ein definiertes Zuführen erleichtert beziehungsweise ermöglicht wird. Ausführungsformen einer Kühlölleiteinrichtung sind dadurch gekennzeichnet, dass die Austrittskanäle an ihrem radial äußeren Rand an zumindest einer Seite eine Abrisskante aufweisen, welche einen Winkel von kleiner gleich 90° aufweist. Damit die Aufweitung des Ölstroms beim Austritt aus dem Austrittskanal möglichst gering ist, ist an zumindest einer Seite des äußeren Rands des Austrittskanals eine Abrisskante vorgesehen. Vorzugsweise ist die Abrisskante an mehreren, insbesondere allen, Seiten des radial äußeren Rands des Austrittskanals vorgesehen. Durch die Abrisskante löst sich der Ölstrom direkt von der Wandung des Austrittskanals und es bleibt ein möglichst laminarer Ölstrom ohne beziehungsweise geringer Aufweitung erhalten. Damit sich die Strömung ablöst weist die Abrisskante einen spitzen Winkel auf, welcher kleiner gleich 90° ist.

Kühlölleiteinrichtung sind in Ausführungsformen dadurch gekennzeichnet, dass die Einlässe an ihrem radial äußeren Rand an zumindest einer Seite einen Radius aufweisen. Für die einströmende Luft hingegen ist es vorteilhaft, dass die Kanten des radial äußeren Rands der Einlässe gerundet sind. Durch die gerundeten Einlässe wird eine gleichmäßigere Strömung der Luft erreicht und Turbulenzen im Luftstrom verringert.

Ausführungsformen einer Kühlölleiteinrichtung sind dadurch gekennzeichnet, dass die Austrittselemente an ihrer dem Ringkanal zugewandten Seite gerundeten sind, um eine Luftströmung von den Einlässen über den Ringkanal zu den Austrittskanälen möglichst laminar zu halten. Indem der Luftstrom möglichst laminar gehalten wird und Turbulenzen vermieden werden, können zusätzliche Verwirbelungen des Ölstroms aufgrund einer turbulenten Luftströmung vermieden beziehungsweise verringert werden.

Ausführungsformen einer Kühlölleiteinrichtung sind dadurch gekennzeichnet, dass die Sperrelemente an den Durchlässen Leitelemente aufweisen, welche radial in den Ringkanal vorstehen, um eine Luftströmung im Ringkanal in Richtung der Austrittskanäle zu leiten. Die über die Einlässe einströmende Luft soll über die Austrittskanäle wieder zusammen mit dem Ölstrom austreten. Um den Luftstrom entsprechend zu leiten und Turbulenzen zu minimieren, sind in den Ringkanal ragende Leitelemente vorgesehen. Die Leitelemente ändern hierbei, vorzugsweise kontinuierlich, die Richtung des offenen Querschnitts des Ringkanals in Richtung des Austrittskanals.

Ein weiterer Aspekt der Anmeldung ist ein Antriebsstrang eines Fahrzeugs, welcher dadurch gekennzeichnet ist, dass eine Kühlölleiteinrichtung gemäß der Beschreibung vorgesehen ist. Durch eine derartige Kühlölleiteinrichtung kann Kühlöl gezielt verteilt werden.

Ausführungsformen eines Antriebsstrangs sind dadurch gekennzeichnet, dass die Kühlölleiteinrichtung in einem Hybridmodul vorgesehen ist. Insbesondere bei einem Hybridmodul, bei dem beispielsweise eine elektrische Maschine, welche rotierende Bauteile umschließt, gekühlt werden muss, ist eine zuverlässige Zuführung von Kühlöl wichtig. Dies kann durch eine erfindungsgemäße Kühlölleiteinrichtung sichergestellt werden.

Antriebsstrang gemäß Ausführungsformen sind dadurch gekennzeichnet, dass die Kühlölleiteinrichtung in einer Kupplungsanordnung vorgesehen ist. Insbesondere nasslaufende Kupplungen benötigen vor allem im betätigten Zustand eine zuverlässige Versorgung mit Kühlöl, was durch eine erfindungsgemäße Kühlölleiteinrichtung sichergestellt werden kann.

Ausführungsformen einer Kühlölleiteinrichtung für eine Kupplungsanordnung, wobei eine Kupplung vorgesehen ist, welche über einen in axialer Richtung beweglichen Kolben betätigbar ist, um zwischen einer betätigten und einer offenen Stellung zu wechseln, wobei der Kolben radial innerhalb der Kupplung angeordnet ist, wobei der Kolben einen Druckraum und einen Ausgleichsraum voneinander trennt, wobei der Ausgleichraum von einem Ausgleichsraumdeckel, welcher in axialer Richtung fest ist, und einem mit dem Kolben gekoppelten Dichtungsdeckel begrenzt ist, und wobei der Ausgleichsraumdeckel und der Dichtungsdeckel radial außen in axialer Richtung überlappen und über ein Dichtelement relativ zueinander in axialer Richtung beweglich verbunden sind, sind dadurch gekennzeichnet, dass im Dichtungsdeckel eine Überlauföffnung vorgesehen ist, welche den Ausgleichsraum mit einem zwischen den Dichtungsdeckel und dem Kolben vorgesehenen Ölkanal verbindet, dass der Ölkanal in radialer Richtung außen offen ist, und dass an einem relativ zum Kolben axial nicht beweglichen Bauteil eine Steuerkante vorgesehen ist, durch welche ein aus dem Ölkanal austretender Ölstrom zumindest größtenteils bei geschlossener Kupplung durch die Kupplung und bei geöffneter Kupplung an der Kupplung vorbei geleitet wird.

Eine Kupplung im Sinn der Anmeldung ist eine Vorrichtung, um einen Drehmoment mechanisch von einer Eingangsseite zu einer Ausgangsseite zu übertragen oder zu trennen. Insbesondere weist eine Kupplung ein oder mehrere Reibkomponenten auf, die miteinander oder mit einer Druckplatte in Kontakt gebracht beziehungsweise getrennt werden. Eine Kupplung kann beispielsweise als Ein-Scheiben-Kupplung, Lamellenkupplung oder Konuskupplung ausgebildet sein. Die Kupplung wird durch einen axial beweglichen Kolben betätigt. Um den Kolben zu bewegen weist dieser auf einer Seite eine Druckraum auf, welcher mit einem Fluid, vorzugsweise Öl, mit Druck beaufschlagt werden kann. Auf der anderen Seite des Kolbens ist ein Ausgleichsraum vorgesehen. Um einen einwandfreie Funktion zu gewährleisten, ist der Ausgleichsraum mit Öl befüllt, vorzugsweise ohne mit Druck beaufschlagt zu sein.

Der Ausgleichsraum wird teilweise durch einen Ausgleichsraumdeckel begrenzt, welcher bezogen auf die Kupplung in axialer Richtung fest vorgesehen ist. Weiter wird der Ausgleichsraum durch einen Dichtungsdeckel begrenzt, welcher mit dem Kolben verbunden und gemeinsam mit diesem bewegbar ist. Damit der Ausgleichsraum auch bei einer Relativbewegung zwischen Ausgleichsraumdeckel und Dichtungsdeckel geschlossen bleibt, überlappen der Ausgleichsraumdeckel und der Dichtungsdeckel in axialer Richtung. Zwischen Ausgleichsraumdeckel und Dichtungsdeckel ist ein Dichtelement vorgesehen, um ein Austreten von Öl aus dem Ausgleichsraum zu verhindern beziehungsweise gering zu halten.

Der Dichtungsdeckel und der Kolben sind hierbei derart miteinander verbunden, dass zwischen dem Dichtungsdeckel und dem Kolben ein Ölkanal gebildet ist, welcher in radialer Richtung nach außen offen ist. Am Dichtungsdeckel ist zumindest eine Überlauföffnung vorgesehen, welche den Ausgleichsraum mit dem Ölkanal verbindet. Durch die Überlauföffnung wird sichergestellt, dass sich im Ausgleichsraum kein beziehungsweise kein übermäßiger Öldruck, insbesondere gegenüber dem Druckraum, aufbaut und gleichzeitig kann das durch die Überlauföffnung abfließende Öl als Kühlöl für weitere Komponenten, wie beispielsweise die Kupplung verwendet werden. Die Überlauföffnung kann beispielsweise als Ringspalt, welcher sich über den gesamten Umfang erstreckt, oder mehrere über den Umfang verteilte Öffnungen ausgebildet sein.

Bei geschlossener Kupplung wird diese vorzugsweise mit Kühlöl versorgt, um eine ausreichende Wärmeabfuhr zu gewährleisten und somit eine Überhitzung und erhöhten Verschleiß zu vermeiden. Bei geöffneter Kupplung hingegen ist es vorteilhaft, wenn der Kupplung kein oder nur geringe Mengen an Kühlöl zugeführt werden, um ein durch zwischen den Reibelementen der Kupplung vorhandenes Kühlöl bedingtes Schleppmoment zu verringern. Hierfür ist an einem axial nicht beweglichen Teil eine Steuerkante vorgesehen, welche in axialer Richtung zwischen den axialen Endpositionen der radial äußeren Öffnung des Ölkanals bei geöffneter beziehungsweise geschlossener Kupplung angeordnet ist. Der durch Fliehkraft bedingte, aus dem Ölkanal austretende Ölstrom kann somit durch die Steuerkante gezielt der Kupplung zugeführt beziehungsweise an der Kupplung zur Versorgung anderen Komponenten, wie einer elektrischen Maschine oder dergleichen, vorbeigeführt werden. Abhängig von der Ausführungsform kann durch die Steuerkante auch der Ölstrom aufgeteilt werden, um den Ölstrom nicht vollständig, sondern nur teilweise an der Kupplung vorbeizuführen. Die Steuerkante ist vorzugsweise als umlaufender, nach innen vorstehender Vorsprung ausgebildet.

Ausführungsformen einer Kühlölleiteinrichtung sind dadurch gekennzeichnet, dass die Steuerkante am Ausgleichsraumdeckel vorgesehen ist. Aufgrund der bezüglich Kupplung axial festen Anordnung sowie der räumlichen Nähe des Ausgleichsraumdeckels zum Dichtungsdeckel und damit dem Ölkanal ist die Steuerkante vorteilhafterweise am Ausgleichsraumdeckel vorgesehen. Durch die räumliche Nähe kann sichergestellt werden, dass der Ölstrom weitestgehend vollständig von der Steuerkante geschalten werden kann, da keine oder nur geringe Aufweitung oder Vernebelung des Ölstroms erfolgt.

Andere Ausführungsformen einer Kühlölleiteinrichtung sind dadurch gekennzeichnet, dass die Steuerkante an einem Innenträger der Kupplung vorgesehen ist. Hierdurch wird vorteilhaft die Fertigung des Ausgleichsraumdeckels vereinfacht und gegebenenfalls Gewicht eingespart werden.

Kühlölleiteinrichtungen gemäß Ausführungsformen sind dadurch gekennzeichnet, dass die Überlauföffnung im radial inneren Bereich des Dichtungsdeckels vorgesehen ist. Indem die Überlauföffnung im radial inneren Bereich vorgesehen ist, wird sichergestellt, dass der Ausgleichsraum ausreichend mit Öl befüllt ist, da dieser Fliehkraftbedingt sich von radial außen mit zentral zugeführtem Öl füllt.

Ausführungsformen einer Kühlölleiteinrichtung sind dadurch gekennzeichnet, dass die Steuerkante als nach radial innen vorstehender Vorsprung ausgebildet ist, welcher zumindest auf einer Seite in axialer Richtung einen Ringraum mit über den Umfang verteilten radialen Durchtrittsöffnungen begrenzt. Durch den radial nach innen vorstehenden Vorsprung kann der von radial innen kommende Ölstrom zuverlässig der Schaltstellung des Kolbens entsprechend unterschiedlichen Bereichen zugeführt werden. Vorteilhafterweise ist benachbart zum Vorsprung ein Ringraum vorgesehen. Über die Durchtrittsöffnungen im Ringraum kann das zugeführte Kühlöl gezielt an die Kupplung oder weitere Bauteile geleitet werden.

Kühlölleiteinrichtung gemäß Ausführungsformen sind dadurch gekennzeichnet, dass die Steuerkante in einem axialen Endbereich vorgesehen ist oder durch die Steuerkante zwei in axialer Richtung benachbarte Ringräume voneinander getrennt sind.

Für eine einfachere Bauteilgeometrie ist es vorteilhaft, wenn der Vorsprung in einem axialen Endbereich vorgesehen ist. Hierdurch kann der Ölstrom in einer der Schaltstellungen des Kolbens an dem Bauteil direkt radial vorbeigeführt werden.

Insbesondere wenn der axiale Abstand der unterschiedlichen von den Schaltstellung des Kolbens abhängigen Positionen für die Zuführung des Kühlöls größer als der axiale Hub des Kolbens ist, kann durch einen Ringraum oder auch beidseitig des Vorsprungs vorgesehene Ringräume beziehungsweise deren Durchtrittsöffnungen das Kühlöl auch über einen größeren axialen Bereich verteilt werden.

Ausführungsformen einer Kühlölleiteinrichtung sind dadurch gekennzeichnet, dass zwischen Dichtungsdeckel und Kolben zumindest ein Abstandshalter vorgesehen ist, und dass der Abstandshalter zumindest eine in radialer Richtung verlaufende, durchgängige Aussparung aufweist, um den Ölkanal zu bilden. Um die Positionierung des Kolbens und des Dichtungsdeckels zueinander zu vereinfachen und auch bei einer eventuellen Verformung der Bauteile, durch beispielsweise Druck, den Ölkanal sicher offen zu halten, ist vorzugsweise mindestens ein Abstandshalter vorgesehen. Durch den Abstandshalter wird die Erstreckung des Ölkanals in axialer Richtung festgelegt. Des Weiteren kann die Verbindung zwischen Kolben und Dichtungsdeckel über den oder die Abstandshalter erfolgen. Um den Ölkanal zu bilden weisen der Abstandshalter und/oder die Abstandshalter zwischen einander Aussparungen auf, welche radial durchgängig sind.

Kühlölleiteinrichtung sind gemäß Ausführungsformen dadurch gekennzeichnet, dass der Abstandshalter im radial äußeren Bereich vorgesehen ist. Durch Abstandshalter im radial äußeren Bereich kann gegebenenfalls durch den Abstandhalter die Geometrie des Auslasses des Ölkanals angepasst werden, um beispielsweise eine möglichst geringe Aufweitung des austretenden Ölstroms zu erreichen, wodurch die Separierung durch die Steuerkante vereinfacht wird.

Ein weiterer Aspekt der Anmeldung ist ein Antriebsstrang, welcher dadurch gekennzeichnet ist, dass eine Kupplungsanordnung mit einer Kühlölleiteinrichtung gemäß einer der beschriebenen Ausführungsformen vorgesehen ist.

Ebenfalls ein Aspekt der Anmeldung ist ein Hybridmodul für einen Antriebsstrang, welches dadurch gekennzeichnet ist, dass eine Kupplungsanordnung mit einer Kühlölleiteinrichtung gemäß der Beschreibung vorgesehen ist, und dass an einem relativ zum Kolben axial nicht beweglichen Bauteil eine Steuerkante vorgesehen ist, durch welche ein aus dem Ölkanal austretender Ölstrom zumindest größtenteils bei geschlossener Kupplung durch die Kupplung und bei geöffneter Kupplung an der Kupplung vorbei an einen Rotor einer elektrischen Maschine des Hybridmoduls geleitet wird.

Im Folgenden wird die Erfindung anhand von Figuren näher erläutert. Gleiche oder ähnliche Bauteile werden mit einheitlichen Bezugszeichen bezeichnet. Die Figuren zeigen im Einzelnen:
- Fig. 1a: stellt ein Ausführungsbeispiel einer Kühlölleiteinrichtung mit geöffneter Kupplung dar.
- Fig. 1b: stellt ein Ausführungsbeispiel einer Kühlölleiteinrichtung gemäß Fig. 1a mit geschlossener Kupplung dar.
- Fig. 2a: stellt ein Ausführungsbeispiel einer Kühlölleiteinrichtung mit geöffneter Kupplung dar.
- Fig. 2b: stellt ein Ausführungsbeispiel einer Kühlölleiteinrichtung gemäß Fig. 2a mit geschlossener Kupplung dar.
- Fig. 3: zeigt einen Kolben mit Dichtungsdeckel gemäß einem Ausführungsbeispiel.
- Fig. 4: stellt einen Schnitt entlang der Linie A-A eines Ausführungsbeispiels gemäß Fig. 3 dar.

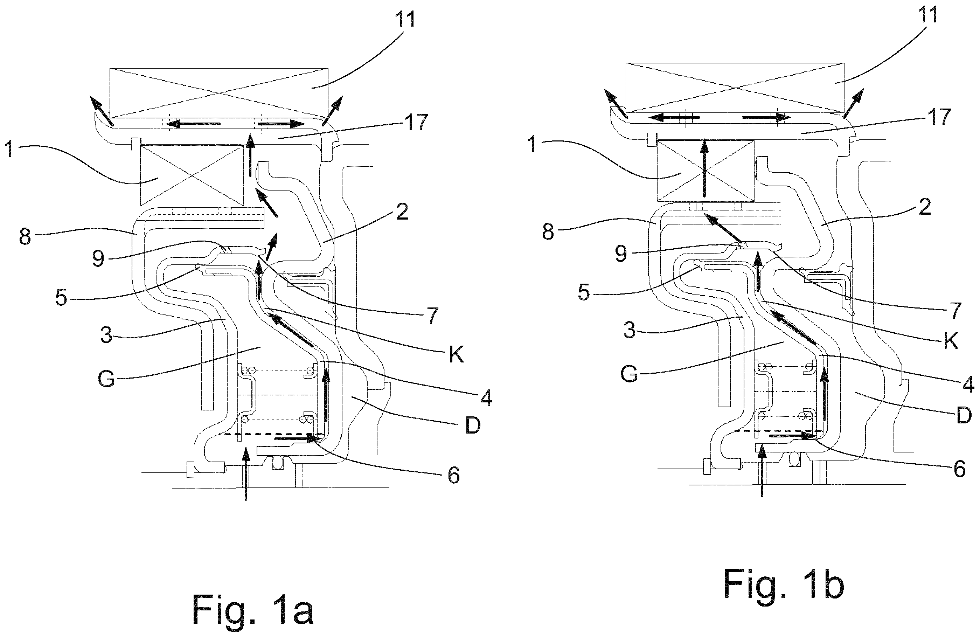

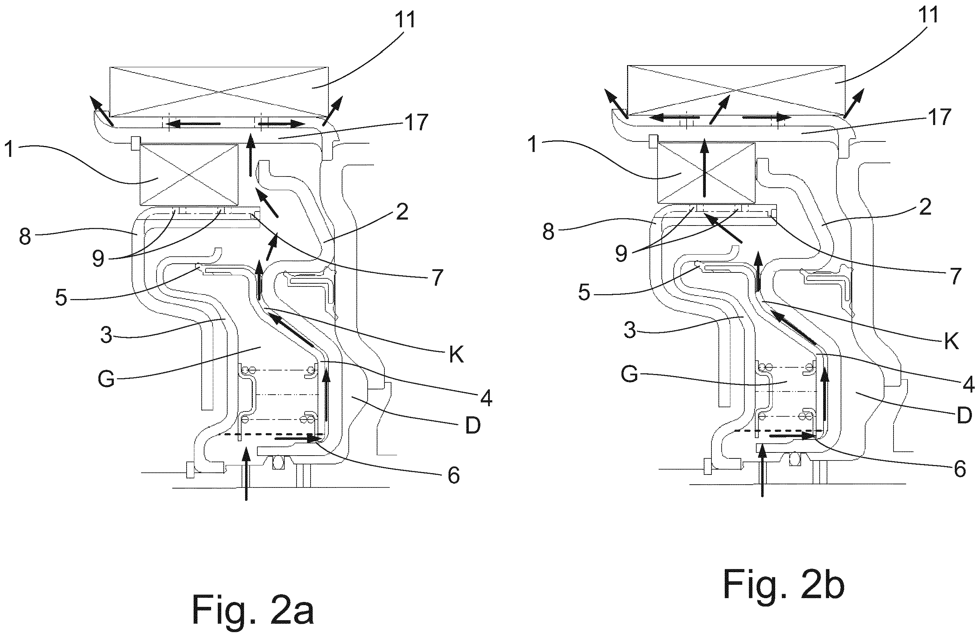

Fig. 1a, 1b, 2a und 2b zeigen jeweils einen Ausschnitt eines Hybridmoduls für einen Antriebsstrang mit Ausführungsbeispielen einer Kühlölleiteinrichtung, wobei vor allem die Bauteile einer Kupplungsanordnung gezeigt sind. Aufgrund des weitestgehend rotationssymmetrischen Aufbaus, ist eine Hälfte dargestellt.

Die Kupplungsanordnung umfasst eine Kupplung 1, welche insbesondere als eine Reibkupplung ausgeführt sein kann. Im dargestellten Beispiel ist die Eingangsseite der Kupplung 1 mit einem Innenträger 8 verbunden. Der Innenträger 8 ist mit einer Eingangswelle verbunden. Die Ausgangsseite der Kupplung 1 ist im dargestellten Ausführungsbeispiel mit einem Rotorträger 17 verbunden. Auf dem Rotorträger 17 ist ein Rotor 11 einer elektrischen Maschine vorgesehen und der Rotorträger 17 ist im gezeigten Ausführungsbeispiel mit einem Gehäuse eines Drehmomentwandler verbunden, wobei auch andere Ausführungen möglich sind, bei denen beispielsweise der Rotorträger direkt mit einer Abtriebs- oder Zwischenwelle verbunden ist.

Zur Betätigung der Kupplung 1 ist ein axial bewegbarer Kolben 2 vorgesehen. Um den Kolben 2 mit Druck zu beaufschlagen, ist eine Druckraum D vorgesehen, welcher im gezeigten Ausführungsbeispiel durch den Kolben 2, das Gehäuse des Drehmomentwandlers, einer dazwischen angeordneten Dichtung sowie einer mit dem Gehäuse verbundenen Zwischenwelle begrenzt wird, und durch die Zwischenwelle mit Öldruck beaufschlagt werden kann. Bezogen auf den Kolben 2 liegt dem Druckraum D ein Ausgleichsraum G axial gegenüber, welcher ebenfalls mit Öl versorgt wird, um die Bauteile zu schmieren und einen Öldruck im Druckraum D im nicht beaufschlagten Zustand auszugleichen. Im gezeigten Ausführungsbeispiel ist im Ausgleichsraum G auch ein elastisches Rückstellelement, wie ein oder mehrere Federn, für den Kolben 2 vorgesehen, durch welches der Kolben 2 im nicht beaufschlagten Zustand in seine Ausgangsposition, hier eine geöffnete Position, zurückgestellt wird.

Der Ausgleichsraum G wird im gezeigten Ausführungsbeispiel durch die Zwischenwelle, über welche auch die Versorgung mit Öl erfolgt, einen mit der Zwischenwelle verbundenen Ausgleichsraumdeckel 3 und dem Kolben 2 beziehungsweise einem mit den Kolben 2 verbunden Dichtungsdeckel 4 begrenzt. Am Dichtungsdeckel 4 ist ein Dichtelement 5 vorgesehen, welches am Ausgleichsraumdeckel 3 anliegt.

Der Dichtungsdeckel 4 schließt mit dem Kolben 2 einen im Wesentlichen in radialer Richtung verlaufenden Ölkanal K ein. Am radial inneren Ende des Dichtungsdeckels 4 ist eine Überlauföffnung 6 vorgesehen, welche den Ausgleichsraum G mit dem Ölkanal K verbindet. Die Überlauföffnung 6 kann als umlaufender Ringspalt ausgeführt sein, oder durch eine oder mehrere über den Umfang verteilte Aussparungen ausgebildet sein. Der Ölkanal K ist an seinem radial äußeren Ende offen, um austretendes Öl als Kühlöl an radial umgebende Bauteile abzugeben.

In den Figuren ist ein durch die Kühlölleiteinrichtung bedingter Ölstrom durch Pfeile dargestellt.

Der beschriebene grundlegende Aufbau ist für alle gezeigten Ausführungsbeispiel, insbesondere die Fig. 1a, 1b, 2a und 2b, gleich, wobei auch andere Ausführungsformen möglich sind.

Fig. 1a zeigt das Ausführungsbeispiel in einem nicht betätigten Zustand der Kupplung 1, bei welcher der Kolben 2 nicht mit Druck beaufschlagt ist.

Der Ausgleichsraumdeckel 3 weist im gezeigten Beispiel am radial äußeren Ende einen Abschnitt auf, der sich in axialer Richtung zum Kolben 2 hin erstreckt. Im axialen Endbereich des Ausgleichsraumdeckels 3 ist eine nach radiale innen vorstehende Steuerkante 7 vorgesehen, welche im Bereich des Ölkanals K, vorzugsweise in axialer Richtung benachbarten Bereich um den Dichtungsdeckel 4, angeordnet ist. Hierdurch wird zumindest der Großteil des Ölstroms am Ausgleichsraumdeckel 3 und somit an der radial den Ausgleichsraumdeckel 3 umgebenden Kupplung 1 vorbei geleitet. Im nicht betätigten Zustand benötigt sie Kupplung 1 keine Zufuhr von Kühlöl. Indem kein Kühlöl, beziehungsweise nur geringe Mengen, zugeführt werden, wird ein zwischen der Eingangs- und Ausgangsseite der Kupplung 1 auftretendes Schleppmoment vermieden oder zumindest verringert, wodurch Verluste verringert werden können.

Der Ölstrom wird im gezeigten Ausführungsbeispiel eines Hybridmoduls an der Kupplung 1 vorbei an den Rotor 11 einer elektrischen Maschine, welche die Kupplungsanordnung umgibt, geführt, um dessen Kühlung zu gewährleisten. Eine Kühlung der elektrischen Maschine ist erforderlich unabhängig davon, ob ein mit der Eingangsseite der Kupplung 1 verbundener Antrieb, wie ein Verbrennungsmotor, über die Kupplung 1 mit dem weiteren Antriebsstrang verbunden ist oder nicht. Im gezeigten Ausführungsbeispiel trifft das Kühlöl auf einen Rotorträger 17 für den Rotor 11 der elektrischen Maschine und wird durch den Rotorträger 17 über die axiale Erstreckung des Rotors 11 verteilt weitergegeben.

Fig. 1b entspricht dem Ausführungsbeispiel gemäß Fig. 1a, wobei die Kupplung 1 in einem betätigten Zustand dargestellt ist. Durch den mit Druck beaufschlagten Druckraum D ist der Kolben 2 in seine betätigte Stellung verschoben. Somit ist auch der Ölkanal K in axialer Richtung gegenüber dem Ausgleichsdeckel 3 und der, an diesem vorgesehenen, Steuerkante 7 verschoben.

Der Ölstrom trifft daher auf den Ausgleichsraumdeckel 3 und wird von der Steuerkante 7 in Richtung eines am Ausgleichsraumdeckels 3, benachbart zur Steuerkante 7, vorgesehenen Ringraum geleitet. Im Bereich des Ringraums sind am Ausgleichsraumdeckel 3 Durchtrittsöffnungen 9 vorgesehen, über welche das Kühlöl an radial umgebende Bauteile geführt werden kann. Durch die Durchtrittsöffnungen 9 wird das Kühlöl im gezeigten Ausführungsbeispiel an den Innenträger 8 der Kupplung 1 geführt und vom Innenträger 8 durch die Kupplung 1 geleitet. Nach der Kupplung 1 wird das Kühlöl vom Rotorträger 17 an die elektrische Maschine, insbesondere den Rotor 11, weitergeleitet.

Durch die Steuerkante 7 wird somit der Ölstrom gezielt in die gewünscht axiale Richtung geleitet beziehungsweise daran gehindert in andere Bereiche abzufließen. Abhängig von der Positionierung der Steuerkante 7 sind auch Ausführungsformen möglich, bei denen der Ölstrom, insbesondere bei einem sich stark aufweitenden Strahl des Ölstroms, durch die Steuerkante 7 aufgeteilt wird, um alle Bauteile konstant mit Kühlöl zu versorgen, jedoch die Mengenverteilung abhängig von der Schaltstellung des Kolbens 2 zu verändern.

In den Fig. 2a und 2b ist ein weiteres Ausführungsbeispiel der Kühlölleiteinrichtung gezeigt. Der grundsätzliche Aufbau ist hierbei dem des Ausführungsbeispiels in Fig. 1a und 1b gleich. Auch stellt Fig. 2a einen nicht betätigten Zustand und Fig. 2b einen betätigten Zustand des Kolbens 2 beziehungsweise der Kupplung 1 dar. Der Unterschied besteht darin, dass der Ausgleichsraumdeckel 3 keinen axial in Richtung Kolben 2 verlängerten Bereich aufweist, sondern die Steuerkante 7 am Innenträger 8 der Kupplung 1 vorgesehen ist.

Die Steuerkante 7 in Fig. 2a und 2b ist analog ebenfalls in einem axialen Bereich, der benachbart zum Austritt des Ölkanals K in Richtung der Bewegung des Kolbens 2 angeordnet. Hierdurch lässt sich analog zu der obigen Beschreibung zu Fig. 1a und 1b der Ölstrom entsprechend an der Kupplung 1 vorbei beziehungsweise durch die Kupplung 1 leiten.

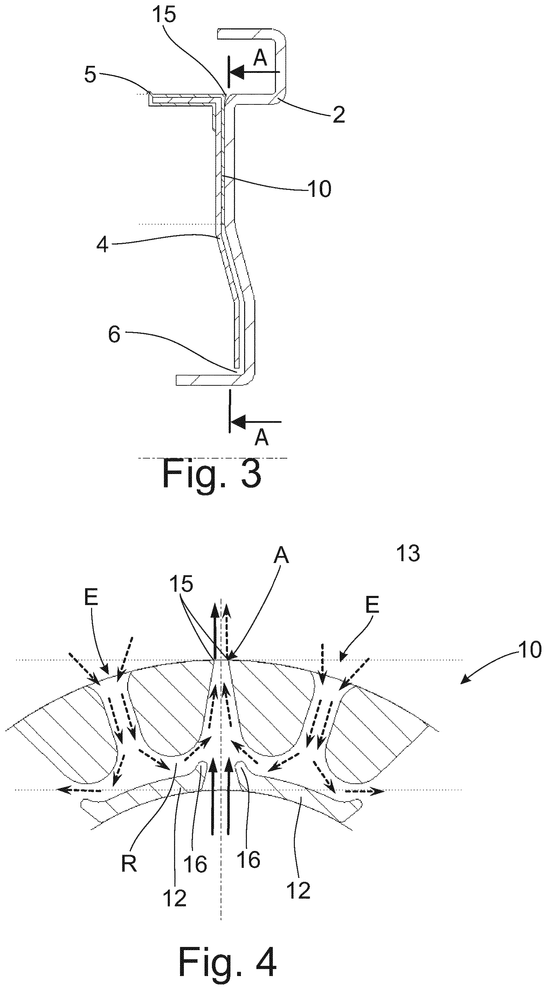

Fig. 3 zeigt einen Kolben 2 mit Dichtungsdeckel 4 gemäß einem Ausführungsbeispiel. Analog zu den Fig. 1a, 1b, 2a und 2b ist am Dichtungsdeckel 4 ein Dichtelement 5 vorgesehen, um einen Ausgleichsraum G abdichten zu können. Radial innen ist eine Überlauföffnung 6 vorgesehen, durch welche Kühlöl in den zwischen Dichtungsdeckel 4 und Kolben 2 gebildeten Ölkanal K fließen kann. Um den Ölkanal K während des Betriebs sicher offen zu halten, sind im gezeigten Beispiel Abstandshalter 10 vorgesehen, da es durch während des Betriebs auftretende Kräfte zu Verformungen kommen kann.

Die Abstandshalter 10 können, wie gezeigt, im radial äußeren Bereich angeordnet sein. Es sind allerdings auch Ausführungsformen möglich, die Abstandshalter 10 an anderen Positionen vorzusehen. Es sind auch Ausführungsformen möglich, bei denen sich die Abstandshalter 10 weitestgehend über die radiale Erstreckung des Dichtungsdeckels 4 erstrecken oder mehrere Abstandshalter 10 auf verschiedenen Durchmessern vorgesehen sind.

Die Abstandshalter 10 können, wie in Fig. 3 dargestellt, einteilig beziehungsweise gemeinsam mit dem Dichtelement 5 angebracht werden. Alternativ oder zusätzlich können die Abstandshalter 10 auch durch separates Bauteil oder Ausformungen an Dichtungsdeckel 4 und/oder Kolben 2 sowie Kombinationen hiervon gebildet sein. Die Abstandshalter 10 müssen den Ölkanal K ermöglichen, weshalb die Abstandshalter 10 in Umfangsrichtung nicht als, über die Dicke des Ölkanals K, geschlossener Ring ausgebildet sein können, um einen radial durchgängigen Ölkanal K bereitzustellen.

Im gezeigten Ausführungsbeispiel ist am äußeren Ende des Ölkanals K eine Abrisskante 15 vorgesehen. Damit der aus dem Ölkanal K austretende Ölstrom möglichst laminar austritt und eine Aufweitung beziehungsweise Verwirbelung und Vernebelung des Kühlöls vermieden oder zumindest verringert wird, ist die Abrisskante 15 vorgesehen. Durch die Abrisskante 15 kann der Ölstrom auch gegebenenfalls noch etwas in axialer Richtung versetzt oder gelenkt werden.

Die lichte Weite des Ölkanals K in axialer Richtung ist unter anderem von der abzugebenden Menge an Kühlöl abhängig. Vorzugsweise liegt die lichte Weite im Bereich von 0,5mm bis 2mm, wobei auch Ausführungsformen mit einer größeren lichten Weite, wie beispielsweise 3mm oder 4mm, möglich sind.

Fig. 4 zeigt einen Teilbereich eines Schnitts gemäß der Line A-A in Fig. 3, welches die Abstandshalter 10 und den äußeren Bereich des Ölkanals K darstellt.

Von radial innen gesehen, weisen die Abstandshalter 10 Sperrelemente 12 und Austrittselemente 13 auf. Die Sperrelemente 12 sind umlaufend vorgesehen und sperren einen inneren Bereich des Ölkanals K nach außen ab, wobei zumindest eine, im gezeigten Beispiel mehrere, vorzugsweise gleichmäßig über den Umfang verteilte Durchlässe 14 zwischen den Sperrelementen 12 vorgesehen sind. Durch die Durchlässe 14 kann die Menge des austretenden Kühlöls begrenzt werden.

Im radial äußeren Rand des Ölkanals K sind im Ausführungsbeispiel mehrere Austrittselemente 13 über den Umfang verteilt vorgesehen. Die Austrittselemente 13 sind zueinander beabstandet, um Austrittskanäle A sowie Einlässe E zu bilden. Die Austrittskanäle A sind hierbei vorzugsweise fluchtend mit den Durchlässen 14 angeordnet. Die Einlässe E sind in Umfangsrichtung zwischen den Austrittskanälen A angeordnet. Die Anzahl der Einlässe E ist mindestens halb so groß wie eine Anzahl der Austrittskanäle A oder ein Vielfaches davon, vorzugsweise ist die Anzahl, wie im gezeigten Beispiel, gleich. Den Einlässen E liegt radial nach innen ein Sperrelement 12 gegenüber. Zwischen den Sperrelementen 12 und den Austrittselementen 13 ist ein Ringkanal R vorgesehen, welcher zumindest einen Einlass E mit einem Austrittskanal A verbindet. Im gezeigten Beispiel verläuft der Ringkanal R umlaufend.

Im gezeigten Ausführungsbeispiel sind an den Sperrelementen 12 Leitelemente 16 vorgesehen, welche den Querschnitt der Durchlässe 14 in radialer Richtung nach au-ßen verringern, um eine Expansion des Kühlöls zu vermeiden. Durch die Leitelemente 16 wird verhindert, dass beim Übergang des Kühlöls vom Durchlass 14 in den Austrittskanal A zerstäubt wird und eine weitestgehend laminare Strömung des Ölstroms aufrechterhalten wird.

Der Ölstrom wird durch die Rotation der Bauteile nach radial außen gefördert. Aufgrund des sich vergrößernden Durchmessers erzeugt das geförderte Volumen des Ölstroms einen Unterdruck, welcher in einem freien Ringspalt zu undefiniertem Ansaugen von Umgebungsatmosphäre, wie Luft, und Vermischen dieser Luft mit dem Öl führt, wodurch eine Verwirbelung und Vernebelung des austretenden Öls vergrö-ßert wird. Um dies zu vermeiden, sind die Einlässe E vorgesehen, durch welche Luft nach innen strömen kann. Über den mit dem Einlass E verbundenen Ringkanal R wird die Luft gezielt dem Austrittskanal A zugeführt. Hierdurch ergibt sich eine Vermischung des durch den Durchlass 14 einströmenden Kühlöls mit der angesaugten Luft, ohne dass es zu wesentlichen Verwirbelungen kommt.

Der Ölstrom ist in Fig. Analog zu den Fig. 1a, 1b, 2a und 2b mit Pfeilen skizziert. Zusätzlich sind in Fig. 4 durch gestrichelt dargestellte Pfeile die Strömung der angesaugten Luft eingezeichnet.

Im weiteren Verlauf nach radial außen ändert sich der Querschnitt des Austrittskanals A derart, dass eine Kompression des austretenden Ölstroms weitestgehend vermieden wird, da dies ansonsten zu einer Expansion und somit einer starken Verwirbelung beziehungsweise Vernebelung des Ölstroms nach dem Austritt aus dem Ölkanal K führen würde. Der Querschnittsverlauf ändert sich hierbei vorzugsweise kontinuierlich, damit ein weitestgehend laminarer Ölstrom erhalten wird.

Zusätzlich sind im dargestellten Ausführungsbeispiel zusätzlich Abrisskanten 15 am Ende des Austrittskanals A vorgesehen, um eine Verwirbelung zu verringern beziehungsweise zu vermeiden und einen laminaren Ölstrom beizubehalten. Eine Verwirbelung des Ölstroms soll vor allem in Richtung der Kupplung 1 möglichst vermieden werden, da diese eine unkontrollierte Menge Kühlöl zuführen würde, was gegebenenfalls zu einem erhöhten Schleppmoment führt.

Die Abrisskante 15 kann wie in Fig. 3 in Umfangsrichtung verlaufen und/oder auch wie in Fig. 4 in axialer Richtung. Die Abrisskante 15 kann wie dargestellt vorzugsweise einteilig hergestellt sein, wobei auch andere Varianten möglich sind. Die Kanten an den Einlässen E sind vorzugsweise gerundet ausgeführt, um ein möglichst gleichmäßiges Einströmen der Luft zu ermöglichen.

Die Erfindung ist nicht auf die beschriebenen Ausführungen eingeschränkt. Es können wie oben ausgeführt, auch nur einzelne vorteilhafte Merkmale vorgesehen werden beziehungsweise verschiedene Merkmale unterschiedlicher Beispiele miteinander kombiniert werden.

### Bezugszeichen

- 1: Kupplung
- 2: Kolben
- 3: Ausgleichsraumdeckel
- 4: Dichtungsdeckel
- 5: Dichtelement
- 6: Überlauföffnung
- 7: Steuerkante
- 8: Innenträger
- 9: Durchtrittsöffnung
- 10: Abstandshalter
- 11: Rotor
- 12: Sperrelement
- 13: Austrittselement
- 14: Durchlass
- 15: Abrisskante
- 16: Leitelement
- 17: Rotorträger

- A: Austrittskanal
- D: Druckraum
- E: Einlass
- G: Ausgleichsraum
- K: Ölkanal
- R: Ringkanal

## Patentansprüche

1. Kühlölleiteinrichtung für rotierende Bauteile, wobei ein ringförmiger Ölkanal (K) in radialer Richtung verläuft, und wobei Kühlöl von radial innen zuführbar ist und der Ölkanal (K) radial außen teilweise offen ist, **dadurch gekennzeichnet, dass** in einem radial äußeren Bereich des Ölkanals (K) ein Dichtbereich vorgesehen ist, dass der Dichtbereich Sperrelemente (12) und Austrittselemente (13) aufweist, dass die Sperrelemente (12) radial innerhalb der Austrittselemente (13) angeordnet sind und zumindest zwei über den Umfang verteilte Durchlässe (14) in radialer Richtung aufweisen, dass durch die Austrittselemente (13) mit den Durchlässen (14) fluchtenden Austrittskanäle (A) und in Umfangsrichtung zwischen den Austrittskanälen (A) gelegene Einlässe (E) gebildet sind, und dass ein Ringkanal (R) zwischen den Sperrelementen (12) und den Austrittselementen (13) vorgesehen ist, um die Einlässe (E) mit den Austrittskanälen (A) beziehungsweise Durchlässen (14) zu verbinden.

2. Kühlölleiteinrichtung nach Anspruch 1, **dadurch gekennzeichnet, dass** sich der Querschnitt der Durchlässe (14) in radialer Richtung nach außen verringert.

3. Kühlölleiteinrichtung nach einem der vorangegangenen Ansprüche, **dadurch gekennzeichnet, dass** sich der Querschnitt der Austrittskanäle (A) in radialer Richtung nach außen verringert.

4. Kühlölleiteinrichtung nach einem der vorangegangenen Ansprüche, **dadurch gekennzeichnet, dass** die Austrittskanäle (A) an ihrem radial äußeren Rand an zumindest einer Seite eine Abrisskante (15) aufweisen, welche einen Winkel von kleiner gleich 90° aufweist.

5. Kühlölleiteinrichtung nach einem der vorangegangenen Ansprüche, **dadurch gekennzeichnet, dass** die Einlässe (E) an ihrem radial äußeren Rand an zumindest einer Seite einen Radius aufweisen.

6. Kühlölleiteinrichtung nach einem der vorangegangenen Ansprüche, **dadurch gekennzeichnet, dass** die Austrittselemente (13) an ihrer dem Ringkanal (R) zugewandten Seite gerundeten sind, um eine Luftströmung von den Einlässen (E) über den Ringkanal (R) zu den Austrittskanälen (A) möglichst laminar zu halten.

7. Kühlölleiteinrichtung nach einem der vorangegangenen Ansprüche, **dadurch gekennzeichnet, dass** die Sperrelemente (12) an den Durchlässen (14) Leitelemente (16) aufweisen, welche radial in den Ringkanal (R) vorstehen, um eine Luftströmung im Ringkanal (R) in Richtung der Austrittskanäle (A) zu leiten.

8. Antriebsstrang eines Fahrzeugs **dadurch gekennzeichnet, dass** eine Kühlölleiteinrichtung gemäß einem der vorangegangenen Ansprüche vorgesehen ist.

9. Antriebsstrang gemäß Anspruch 8, **dadurch gekennzeichnet, dass** die Kühlölleiteinrichtung in einem Hybridmodul vorgesehen ist.

10. Antriebsstrang gemäß einem der Ansprüche 8 oder 9, **dadurch gekennzeichnet, dass** die Kühlölleiteinrichtung in einer Kupplungsanordnung vorgesehen ist.

## Claims

1. Cooling oil conducting device for rotating components, wherein an annular oil duct (K) extends in the radial direction, and wherein cooling oil is able to be fed from radially inside and the oil duct (K) is partially open radially on the outside, **characterized in that** a sealing region is provided in a radially outer region of the oil duct (K), that the sealing region has blocking elements (12) and exit elements (13), that the blocking elements (12) are disposed radially within the exit elements (13) and in the radial direction have at least two passages (14) distributed over the circumference, that exit ducts (A) which are co-aligned with the passages (14), and inlets (E) which lie in the circumferential direction between the exit ducts (A), are formed by the exit elements (13), and that an annular duct (R) for connecting the inlets (E) to the exit ducts (A), or the passages (14), respectively, is provided between the blocking elements (12) and the exit elements (13).

2. Cooling oil conducting device according to Claim 1, **characterized in that** the cross section of the passages (14) decreases in the radial direction towards the outside.

3. Cooling oil conducting device according to one of the preceding claims, **characterized in that** the cross section of exit ducts (A) decreases in the radial direction towards the outside.

4. Cooling oil conducting device according to one of the preceding claims, **characterized in that** the exit ducts (A) on their radially outer periphery on at least one side have a breakaway edge (15) which has an angle of less than or equal to 90°.

5. Cooling oil conducting device according to one of the preceding claims, **characterized in that** the inlets (E) on their radially outer periphery on at least one side have a radius.

6. Cooling oil conducting device according to one of the preceding claims, **characterized in that** the exit elements (13) are radiussed on their side facing the annular duct (R) in order to keep an air flow from the inlets (E) via the annular duct (R) to the exit ducts (A) as laminar as possible.

7. Cooling oil conducting device according to one of the preceding claims, **characterized in that** the blocking elements (12) at the passages (14) have directing elements (16) which protrude radially into the annular duct (R) in order to direct an air flow in the annular duct (R) in the direction of the exit ducts (A).

8. Drivetrain of a vehicle, **characterized in that** a cooling oil conducting device according to one of the preceding claims is provided.

9. Drivetrain according to Claim 8, **characterized in that** the cooling oil conducting device is provided in a hybrid module.

10. Drivetrain according to one of Claims 8 and 9, **characterized in that** the cooling oil conducting device is provided in a clutch assembly.

## Revendications

1. Dispositif de guidage d'huile de refroidissement pour des composants rotatifs, dans lequel une conduite d'huile annulaire (K) s'étend dans la direction radiale, et dans lequel de l'huile de refroidissement peut être acheminée depuis radialement à l'intérieur, et la conduite d'huile (K) est partiellement ouverte radialement à l'extérieur, **caractérisé en ce que** dans une zone radialement extérieure de la conduite d'huile (K), une zone d'étanchéité est prévue, **en ce que** la zone d'étanchéité présente des éléments de blocage (12) et des éléments de sortie (13), **en ce que** les éléments de blocage (12) sont disposés radialement à l'intérieur des éléments de sortie (13) et présentent dans la direction radiale au moins deux passages (14) répartis sur la circonférence, **en ce que** les éléments de sortie (13) forment des conduites de sortie (A) en affleurement avec les passages (14) et des entrées (E) situées dans la direction circonférentielle entre les conduites de sortie (A), et **en ce qu'**une conduite annulaire (R) est prévue entre les éléments de blocage (12) et les éléments de sortie (13) pour relier les entrées (E) aux conduites de sortie (A) ou aux passages (14), respectivement.

2. Dispositif de guidage d'huile de refroidissement selon la revendication 1, **caractérisé en ce que** la section transversale des passages (14) diminue vers l'extérieur dans la direction radiale.

3. Dispositif de guidage d'huile de refroidissement selon l'une quelconque des revendications précédentes, **caractérisé en ce que** la section transversale des conduites de sortie (A) diminue vers l'extérieur dans la direction radiale.

4. Dispositif de guidage d'huile de refroidissement selon l'une quelconque des revendications précédentes, **caractérisé en ce que** les conduites de sortie (A) présentent au niveau de leur bord radialement extérieur sur au moins un côté une arête de décrochage (15) qui présente un angle inférieur ou égal à 90°.

5. Dispositif de guidage d'huile de refroidissement selon l'une quelconque des revendications précédentes, **caractérisé en ce que** les entrées (E) présentent au niveau de leur bord radialement extérieur un rayon sur au moins un côté.

6. Dispositif de guidage d'huile de refroidissement selon l'une quelconque des revendications précédentes, **caractérisé en ce que** les éléments de sortie (13) sont arrondis sur leur côté tourné vers la conduite annulaire (R) afin de maintenir aussi laminaire que possible un écoulement d'air allant des entrées (E) aux conduites de sortie (A) en passant par la conduite annulaire (R).

7. Dispositif de guidage d'huile de refroidissement selon l'une quelconque des revendications précédentes, **caractérisé en ce que** les éléments de blocage (12) présentent au niveau des passages (14) des éléments de guidage (16) qui font radialement saillie dans la conduite annulaire (R) afin de guider un écoulement d'air dans la conduite annulaire (R) en direction des conduites de sortie (A).

8. Chaîne cinématique d'un véhicule, **caractérisée en ce qu'**un dispositif de guidage d'huile de refroidissement selon l'une quelconque des revendications précédentes est prévu.

9. Chaîne cinématique selon la revendication 8, **caractérisée en ce que** le dispositif de guidage d'huile de refroidissement est prévu dans un module hybride.

10. Chaîne cinématique selon l'une des revendications 8 ou 9, **caractérisée en ce que** le dispositif de guidage d'huile de refroidissement est prévu dans un agencement d'embrayage.
